# EUROPEAN PATENT SPECIFICATION

(11) **EP 4 473 209 B1**
(45) Date of publication and mention of the grant of the patent: **22.04.2026**
(21) Application number: 23706531.3
(22) Date of filing: 03.02.2023
(51) Int. Cl.: F02M 21/02, F02M 51/06, F02M 61/04, F02M 61/16

(54) **FUEL INJECTOR**
KRAFTSTOFFEINSPRITZVENTIL
INJECTEUR DE CARBURANT

(30) Priority: 03.02.2022 GB 202201395; 03.02.2022 GB 202201394; 11.02.2022 GB 202201826
(43) Date of publication of application: 11.12.2024
(73) Proprietor: Phinia Delphi Luxembourg Sarl, 4367 Belvaux (LU)
(72) Inventor: COOKE, Michael Peter, Rochester Kent ME1 1LZ (GB)
(74) Representative: Keltie LLP
(86) International application number: PCT/EP2023/052644
(87) International publication number: WO 2023/148309

(56) References cited:
- DE-A1- 102016 220 326
- FR-A1- 3 017 685
- KR-B1- 102 093 986
- US-A1- 2002 014 540
- US-A1- 2013 098 333
- US-B1- 6 338 445
- US-B2- 9 422 899

## Description

### FIELD OF THE INVENTION

This invention relates to a fuel injector for use in a gaseous fuel injection system. In particular, the invention relates to a fuel injector for gaseous fuel such as hydrogen for delivering fuel to an internal combustion engine.

### BACKGROUND

In fuel injection systems for liquid fuel, it is known for a fuel pump to supply fuel to a high-pressure accumulator (or common rail), from where it is delivered into each cylinder of the engine by means of a dedicated fuel injector. Typically, a fuel injector has an injection nozzle that is received within a bore provided in a cylinder head of the cylinder, and a valve needle which is actuated to control the release of high-pressure fuel into the cylinder from spray holes provided in the injection nozzle.

One simple way of opening and closing a valve needle is to couple a solenoid actuator directly to the valve needle, by attaching an armature of the actuator to the valve needle (or by providing a valve needle with an integral armature). The valve needle is biased towards a seating surface so that, when the solenoid is not energised, the valve needle prevents fuel flow through the spray holes. When the solenoid is actuated, the valve needle is lifted away from its seating surface and fuel injection takes place.

Fuel injectors and injection systems may be configured in a similar manner for use with gaseous fuel, such as hydrogen. In this case, the hydrogen is typically held at high pressure in a storage tank of the vehicle, for example up to 700bar. Meanwhile, the injectors may operate at approximately 300bar, for example. So, it may be possible for fuel to be delivered directly from the tank to the fuel injectors, thereby obviating the need for an accumulator. A complication with this approach, however, is that the fuel pressure reduces as the tank is depleted. For example, the fuel pressure may drop to 150 bar or lower as the tank empties. As the force required to open the valve needle is influenced by the fuel pressure, it follows that the opening force varies according to the filling state of the tank.

A fuel injector for gaseous fuel is known for example from DE 102016220326 A1.

It is against this background that the invention has been devised.

### SUMMARY OF THE INVENTION

According to the present invention, there is provided a fuel injector for delivering gaseous fuel to an internal combustion engine, the fuel injector comprising; an injection nozzle comprising a nozzle body provided with a nozzle bore; a valve needle assembly received within the nozzle bore and including a valve needle engageable with a seat region to control gaseous fuel delivery through at least one outlet of the injection nozzle and; an actuator arrangement comprising at least a first actuator and a second actuator, both the first actuator and the second actuator being coupled to a valve needle coupling member which is operable to apply an opening force from the first actuator and the second actuator to an engagement surface of the valve needle assembly to cause an opening movement thereof when the first actuator and the second actuator are actuated; wherein the valve needle coupling member defines a separation distance with the engagement surface of the valve needle assembly so that the valve needle coupling member only impacts the engagement surface when the valve needle coupling member has moved through the separation distance following actuation, and whereby the valve needle coupling member and the engagement surface remain engaged through a full range of movement of the valve needle to a full lift position.

It is one advantage of the fuel injector that the full available force from both the first and second actuator arrangements maintain the valve needle at full lift throughout the full stroke of the valve needle. This also helps to minimize the pressure drop and maintain the desired fuel pressure level.

In one embodiment of the present invention, the valve needle coupling member may be a pull tube within which a portion of the valve needle is received.

In another embodiment, the pull tube may define a flow path for gaseous fuel through the injection nozzle.

In another embodiment, the pull tube may also be provided with at least one opening to allow gaseous fuel flowing within the pull tube to flow radially out through the pull tube for delivery to downstream parts of the injection nozzle.

In another embodiment, the valve needle coupling member may define an internal engagement surface which is engageable with the engagement surface of the valve needle assembly.

In another embodiment, the internal engagement surface of the valve needle coupling member and the engagement surface of the valve needle assembly may be frusto-conical surfaces.

In another embodiment, the engagement surface of the valve needle assembly may be defined by a lift member carried on the valve needle.

In another embodiment, the lift member may be a tubular part carried on the valve needle.

According to the present invention, the first actuator includes a first armature carried by the coupling member and the second actuator includes a second armature carried by the coupling member, the fuel injector further comprises a stop member which defines a stop surface with which the first armature is brought into engagement when the valve needle is brought to close against the seat region.

The stop member further defines an abutment surface for a spring which serves to urge the valve needle against the seat region to close the valve needle when the first actuator and the second actuator are de-actuated.

In another embodiment, the stop member may also be formed from a damping material so that the stop member absorbs movement of the first armature as it is brought into engagement with the stop member.

The use of the stop member being formed from a damping material reduces fluctuations in fuel injection pressure which could arise from the armature bounce. Advantageously, this improves the stability of fuel injection and ensures that the fuel is delivered in a controlled and precise manner, which optimizes the engine performance and fuel efficiency. Furthermore, this minimizes any prolonged vibration which can otherwise lead to damage over prolonged operation, which could result in gas leakage during use.

In another embodiment of the invention, the fuel injector may further comprise first and second stop surfaces for the first and second armatures, respectively, with which the first and second armatures engage when the valve needle moves into the full lift position.

### BRIEF DESCRIPTION OF THE DRAWINGS

In order that the invention may be more readily understood, preferred non-limiting embodiments thereof will now be described, by way of example only, with reference to the accompanying drawings, in which:
Figure 1 is a cross-sectional view of a fuel injector of an embodiment of the invention;
Figure 2 is a cross-sectional view of the injector in Figure 1 having an enlarged cross-sectional view to highlight a separation gap of engagement surfaces shown of Figure 1;
Figure 3 is a cross-sectional view of the fuel injector in Figure 1 when the valve needle of the injection nozzle is at the point of opening;
Figure 4 is a cross-sectional view of the fuel injector in Figures 1 and 2 when the valve needle of the injection nozzle is fully lifted away from its valve seat.

In the drawings, as well as in the following description, like features are assigned like reference signs.

### SPECIFIC DESCRIPTION

Throughout this description, terms such as 'top', 'bottom', 'upper' and 'lower', and other directional references, are used with reference to the orientation of the fuel injector as shown in the accompanying drawings. However, it will be appreciated that such references are not limiting and that fuel injectors according to the invention could be used in any orientation.

### DETAILED DESCRIPTION OF THE INVENTION

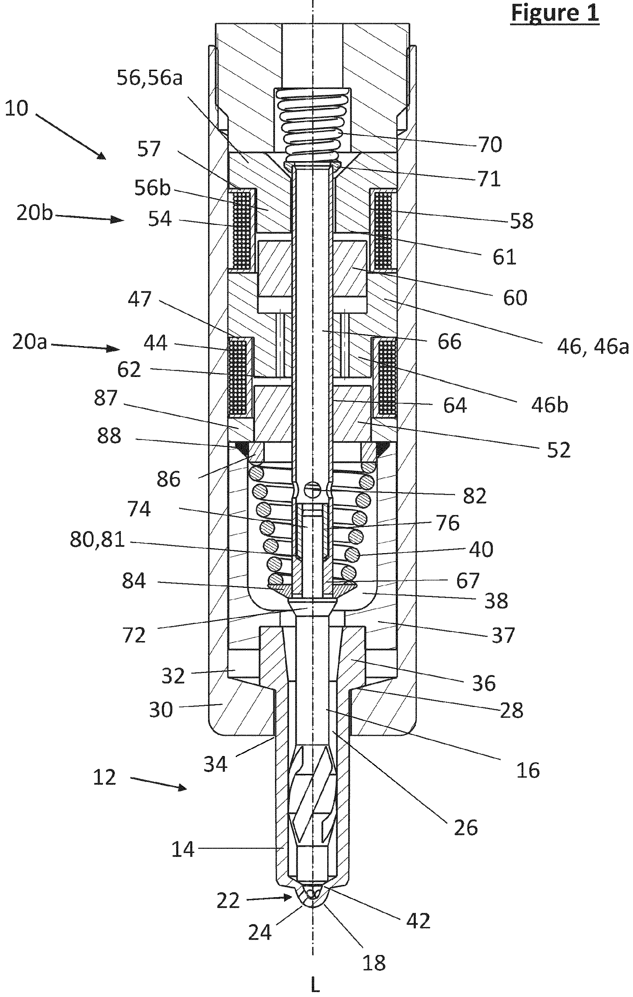

Figure 1 shows a first embodiment of a fuel injector 10 for gaseous fuel for use in an internal combustion engine. The fuel injector 10 is of the inwardly-opening type and comprises an injection nozzle 12 having a substantially cylindrical nozzle body 14, through which a valve needle 16 of a valve needle assembly extends downwardly towards a nozzle tip 18.

The fuel injector 10 also includes first and second actuator arrangements, referred to generally as 20a, 20b, for the injection nozzle 12. The injector 10 has a longitudinal axis L and the injection nozzle 12, and hence the valve needle 16, extends along the longitudinal axis L.

The nozzle tip 18 defines a sac volume 22 which receives gaseous fuel in use for delivery to the combustion chamber of the engine (not shown). In the region of the sac volume 22, the wall of the nozzle body 14 is provided with a plurality of nozzle outlets 24, which extend through the thickness of the walls of the nozzle body 14 to enable fluid communication between a nozzle bore 26 and the environment external to the fuel injector 10 (i.e. the combustion chamber). Only one nozzle outlet 24 is fully visible in the figures, with two more partially visible, due to the cross-sectional view, but it will be appreciated that the set of nozzle outlets 24 may comprise any suitable number of such outlets, and potentially a single outlet.

At the opposite end of the injection nozzle 12 to the nozzle tip 18, the nozzle body 14 defines a shoulder region 28, which has an increased outer diameter when compared to the rest of the nozzle body 14. The nozzle body 14 is received within a tubular housing 30 which defines an internal bore 32, which receives the other parts of the injector 10 also. The shoulder region 28 is engaged with a step in the internal surface of the tubular housing 30 and the elongate stem of the nozzle body 14 extends and protrudes through an opening 34 at a lower end of the housing 30. An enlarged head end 36 of the nozzle body 14, remote from the tip 18, is received within an insert 37 located within a lower section of the tubular housing 30. The insert 37 defines a spring chamber 38, which houses a nozzle spring 40 for biassing the valve needle 16 into engagement with a valve needle seat 42. The nozzle spring 40 is configured to provide a relatively high force, to counteract the force generated on the relatively large seat region 42 by high pressure in the combustion chamber.

The valve needle assembly is operable to control fuel delivery through the nozzle outlets 24. The valve needle 16 is received within the nozzle bore 26 and is engageable with a seat region 42, which is defined by a frusto-conical surface at the lower end of the nozzle bore 26 of the injection nozzle 10.

With the valve needle 16 engaged with the seat region 42, this defines a 'closed' position of the valve needle 16, with fuel being prevented from flowing out of the fuel injector 10 through the nozzle outlets 24. In contrast, an 'open' position of the valve needle 16 is defined when the valve needle 16 is moved away from the seat region 42, with fuel consequently being allowed to flow out of the nozzle outlets 24 via the nozzle bore 26 by means of flats, slots or grooves provided on the surface of the valve needle 16.

Further description of the operation of the fuel injector 10 will follow later.

Within the upper section of the housing 30, first and second actuator arrangements 20a, 20b are provided which are arranged axially in series along the longitudinal axis L of the fuel injector 10, the first actuator arrangement 20a being below the second actuator arrangement 20b in the orientation shown in Figure 1.

The first actuator arrangement 20a comprises a solenoid defining a first coil 44, which is arranged concentrically around a first core member 46 in a radially outer region of the first actuator arrangement 20a. The first coil 44 is mounted on a first coil-former 47 in a known manner. The first actuator arrangement 20a further comprises a first armature 52, which is arranged to move axially upwardly to engage the first core member 46 when the first coil 44 is energised.

Correspondingly, the second actuator arrangement 20b comprises a solenoid defining a second coil 54, which is arranged concentrically around a second core member 56 in a radially outer region of the second actuator arrangement 20b. The second coil 54 is mounted on a second coil-former 57 in a known manner. The second actuator arrangement 20b further comprises a second armature 60, which is arranged to move axially upwardly to engage the second core member 56 when the second coil 54 is energised.

Each core member 46, 56 comprises an upper region 46a, 56a and a lower region 46b, 56b, with the lower regions 46b, 56b protruding into the space encircled by the respective coil 44, 54 and therefore being located radially inward of the respective coil 44, 54. The lower region 46b, 56b of each core member 46, 56 has a planar underside defining a top stop surface 61, 62 that limits upward movement of the respective one of the armatures 52, 60, as will be described in further detail below.

The valve needle assembly also includes a valve needle coupling member in the form of a pull tube 64, which extends coaxially along the longitudinal axis L of the injector 10. The pull tube 64 defines an internal bore 66, which is shaped towards the lower end so as to define a relatively thick-walled portion 67 compared to the wall thickness along the remainder of the length of the pull tube 64. The relatively thick-walled portion 67 of the pull tube 64 defines an internal engagement surface 80 of frusto-conical form.

The first armature 52 and the second armature 60 are mounted on the pull tube 64, spaced apart along the pull tube axis L. The motions of the first armature 52, the second armature 60 and the pull tube 64 are coupled together. When the coils 44, 54 of the first and second actuator arrangements 20a, 20b are energised, the first and second armatures 52, 60 are caused to move upwardly (in the illustration shown), hence pulling the pull tube 64 upwardly.

An armature return spring 70 is mounted on a resting plate 71 carried at the upper end of the pull tube 64. The armature return spring 70 serves to urge the combined mass of the first armature 52, the second armature 60 and the pull tube 64 in a downwards direction towards an integral collar 72 on the valve needle 16.

At the upper end of the valve needle 16, remote from the tip 18, the valve needle 16 includes an upper stem 74 of reduced diameter directly above the integral collar 72 which extends into the pull tube 64. The upper stem 74 carries a tubular part in the form of a lift member 76 in an interference fit. A lower surface of the lift member 76 defines an engagement surface 81 which is shaped to cooperate with the engagement surface 80 on the pull tube 64. With the valve needle 16 seated against the valve seat 42, as shown in Figure 1, the respective engagement surfaces 80, 81 of the lower region of the pull tube 64 and the lift member 76 are spaced apart by a separation distance, D. The lift member 76 may take any convenient form but in the illustration shown is an annular piece within which the upper end of the valve needle 16 is received.

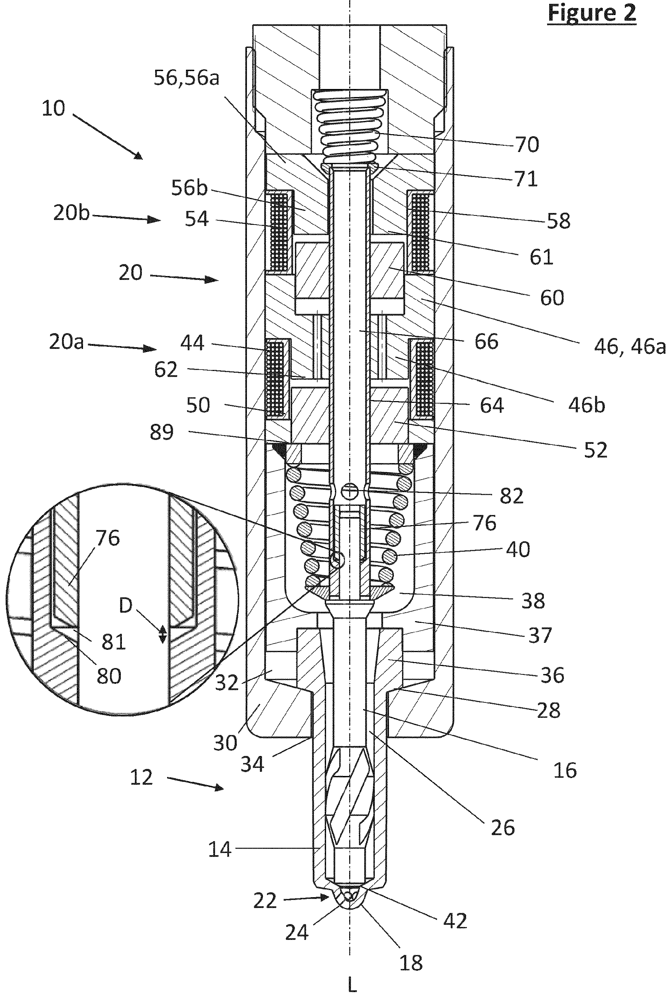

The gap D between the engagement surface 80 of the pull tube 64 and the engagement surface 81 of the lift member 76 that comes into contact with the pull tube 64, such that the pull tube 64 may accelerate upwards to transmit an impact force to the valve needle 16, is shown more clearly in the enlarged portion of Figure 2.

Because the pull tube 64 is a tubular component and defines the internal bore 66, it conveniently provides a flow path for the gaseous fuel through the middle of the injector 10. Fuel is introduced into the upper end of the housing 30 from a source of high pressure fuel. The fuel flows through and around the armature return spring 70 at the upper end of the pull tube 64 and onwards through the pull tube 64 itself. The pull tube 64 is provided with a plurality of holes 82 which extend radially through the wall of the tube 64 to define a flow path for fuel from the interior of the pull tube 64 into the spring chamber 38 and then onward to the downstream parts of the fuel injector 10. The valve needle 16 is provided with a plurality of grooves or flutes on its outer surface to permit fuel delivered to the nozzle body 14 to flow between the spring chamber 38 and the sac volume 22 when the valve needle 16 is lifted away from the seat region 42.

The nozzle spring 40 is operably engaged with the valve needle 16 via the spring seat 84. The upper stem of the valve needle 16 is received through nozzle spring 40 which provides a return force that acts on the valve needle 16, via the spring seat 84, urging it into the closed position in engagement with the seat region 42.

At its lower end, the nozzle spring 40 is mounted on the spring seat 84 which is formed from a collar carried on the integral collar 72 of the valve needle 16. As shown more clearly in Figure 1, the pull tube 64 is received within, and can slide relative to, the collar defining the spring seat 84. At the upper end of the nozzle spring 40, the end of the nozzle spring 40 engages with a lower abutment surface of a member defining a bottom stop 86 (first stop member) for the first armature 52. The nozzle spring 40 presses the bottom stop 86 into engagement with an annular support ring 87 that is fixed to the housing 30 beneath the first coil 44, the support ring 87 therefore preventing upward movement of the bottom stop 86 such that the bottom stop 86 is held in place against the support ring 87 by the nozzle spring 40.

Referring back to Figure 2, the bottom stop 86 is positioned beneath the first armature 52 to define a stop surface 89 for the first armature 52 as it moves downwardly (in the illustration shown) under the force of the armature return spring 70. Because the bottom stop 86 is conveniently held in place by the nozzle spring 40, this enables the bottom stop 86 to absorb the impact from the first armature 52 when the nozzle valve needle 16 closes. There is a gap below the pull tube 64 when the armature 52 touches the stop surface 89 of the bottom stop 86.

The bottom stop 86 is typically made of a material with damping properties, such as a polymer, to minimise armature bounce at the end of its travel. An annular ring 88 is mounted on the bottom stop 86 to provide further damping when the first armature 52 is brought to a stop upon engagement with the bottom stop 86. This reduces fluctuations in fuel injection pressure which could arise from the armature bounce. Advantageously, this improves the stability of fuel injection and ensures that the fuel is delivered in a controlled and precise manner, which optimizes the engine performance and fuel efficiency. Furthermore, this minimizes any prolonged vibration which can otherwise lead to damage over prolonged operation, which can result in gas leakage during use.

The annular ring 88 may also provide the function of a seal to prevent gas escaping from the injector 10. The annular ring 88 may be made of an elastomer material or any material with suitable damping properties. As described previously, whilst the first armature 52 is provided with the bottom stop 86 to limit the extent of downward travel, the top stop for the first armature 52 is defined by the surface 61 of the first core member 46. The top stop surfaces 61, 62 are sized and dimensioned so that movement of the first and second armatures 52,60 is stopped substantially at the same time when they are moved upwardly upon actuation of the actuator arrangements 20a, 20b.

In other embodiments, a further stop member(s) may be incorporated to define one or more of the top stop surfaces 61, 62, instead of the core members 46, 56.

Figure 1 shows the injector 10 in a position in which the valve needle 16 is engaged with the valve seat 42 and therefore in its closed position. The armature return spring 70 pushes the pull tube 64 downwards, and hence the first armature 52 is engaged with the bottom stop 86. In this position, no gaseous fuel is able to escape from the sac volume 22 through the outlets 24 as the valve needle 16 is seated against the valve seat 42.

In operation, a current is applied to the first and second coils 44, 54, which causes electromagnetic forces to act on the armatures 52,60, pulling the armatures 52,60 upwards, together and simultaneously, against the force of the armature return spring 70. Once the force of the armature return spring 70 is overcome the armatures 52,60 start to move, causing the pull tube 64 to be drawn upwardly.

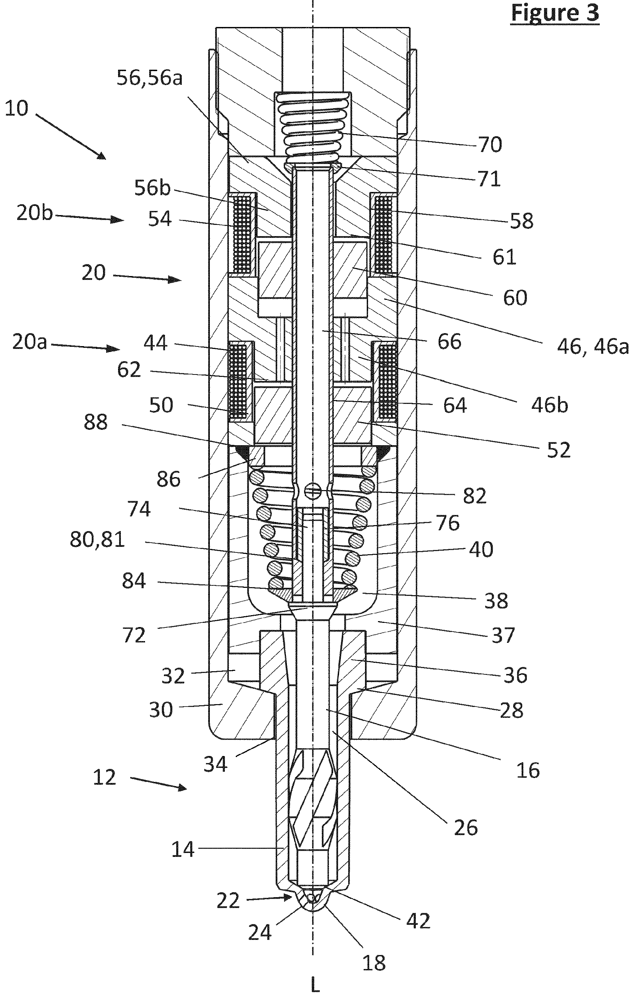

Figure 3 shows the injector 10 at the point that the nozzle valve needle 16 is about to open. As the first armature 52 moves in an upward direction away from the bottom stop 86, and the second armature 60 also moves upwardly, the armature return spring 70 is compressed and the gap, D, between the frusto-conical engagement surface 80 of the pull tube 64 and the engagement surface 81 of the lift member 76 on the valve needle stem 74 closes. The combined moving mass of the pull tube 64 and the first and second armatures 52,60 is therefore brought into contact with the lift member 76 which transmits an impact force to the valve needle 16, via the engagement surfaces 80, 81, causing the valve needle 16 to move away from the valve seat 42 and through a lift stroke. This may be considered to be akin to a 'hammer strike' action. As both armatures 52,60 are moving at the point of impact, this can typically provide twice the impact force of a single armature.

The lift member 76 may be made of any material that can withstand the impact that is provided by a "hammer strike" upon lifting of the pull tube 64.

As the pull tube 64 continues to move through the lift stroke, the valve needle 16 moves further away from the valve seat 42. Once the valve needle 16 has moved away from the valve seat 42, gaseous fuel delivered to the sac volume 22 through the internal bore 66 of the pull tube 64 is able to flow out through the nozzle outlets 24.

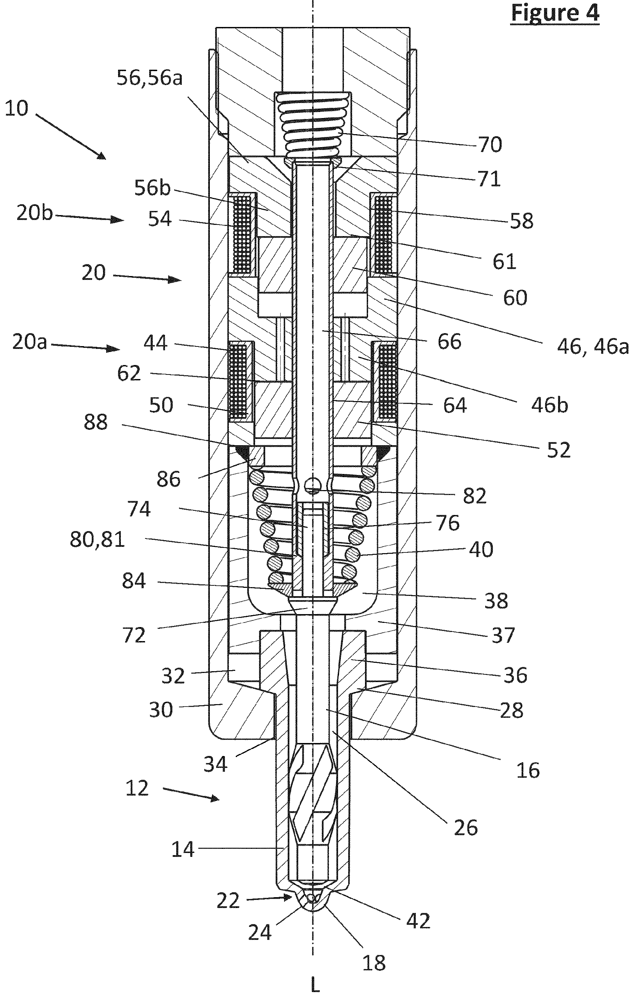

Figure 4 shows the injector 10 at the point that the nozzle valve needle 16 is in the full lift position. Both the armature return spring 70 and nozzle spring 40 are compressed, with the nozzle spring 40 maintaining contact between the pull tube 64 and the lift member 76. Both the first armature 52 and the second armature 60 are in contact with their respective top stop surfaces 61, 62. Importantly, at this point the engagement surfaces 80, 81 are still engaged, coupling the pull tube 64 to the lift member 76.

It will therefore be appreciated from the foregoing description that throughout the full range of the lift stroke the frusto-conical engagement surface 80 of the pull tube 64 and the engagement surface 81 of the lift member 76 remain coupled together, until the end of stroke when the first armature 52 reaches its stop surface 61 and the second armature 60 reaches its stop surface 62. Because the lift member 76 and the pull tube 64 remain coupled together, the full available force from both the first and second actuator arrangements 20a, 20b therefore maintains the valve needle 16 at full lift throughout the full stroke of the valve needle 16. This also helps to minimize the pressure drop and maintain the desired fuel pressure level.

In this arrangement, the solenoids can have their coils wired in series or parallel and driven by a single electrical circuit, saving cost on the electronics compared to driving two coils separately.

To generate a similar amount of force using a single solenoid actuator, a larger diameter would be required to provide a coil with more turns, which would increase the size and overall weight of the injector, and therefore increase the manufacturing costs and complexity of the injector. It will be appreciated, however, that the present invention is not limited to first and second actuator arrangements. In other embodiments, more than two actuators may be used to generate the lift force required to lift the valve needle 16. It is recognized that previously disclosed inventions provide an actuator arrangement in which multiple actuators are used to generate the lift force required to lift the valve needle 16, but in the embodiments of the present invention, the armatures 52, 60 and pull tube 64 are coupled together over the full range of lift, whereas the previous inventions do not address this aspect.

It will be appreciated that various other embodiments of the invention are also envisaged without departing from the scope of the appended claims.

For example, in other embodiments, a solid cylindrical body may be used instead of a coupling member in the form of a pull tube. In this case the flow path may be defined radially around the body, and/or by means of passages drilled through the solid cylindrical body, and the flow path may be continued by passages formed in the first and second core members and/or the first and second armatures.

The engagement surfaces 80, 81 are not limited to the frusto-conical shape as described in the present invention. Other embodiments may have an altered shape of the engagement surface 80, 81 shown in the accompanying Figures such that the surfaces of the pull tube 64 and the lift member are angled differently, ranging from being completely perpendicular to the pull tube axis L to being near parallel. Advantageously, the shape of the engagement surfaces 80, 81 of the pull tube 64 and the valve needle 16 can be modified to meet the performance requirements of the fuel injector 10. For example, the engagement surface 80,81 being completely perpendicular to the pull tube axis L provides improved coupling between the respective parts 64, 16, providing more accurate control of fuel injection. In contrast, the engagement surfaces 80, 81 of the pull tube 64 and the valve needle 16 being near parallel increases the surface area on which the lift force from the pull tube 64 acts on the valve needle 16 such that the force is distributed over a larger area. This reduces the impact force that is experienced by the pull tube 64 and the valve needle 16 at the engagement surfaces 80, 81 and, therefore, improves the durability and longevity of the fuel injector. This reduces the need for frequent maintenance and replacements, and thereby reduces the maintenance cost of the fuel injector over its operating lifetime.

Overall, the shape of the engagement surfaces 80, 81 can be optimized to balance the trade-off between improving the coupling between the pull tube 64 and the valve needle 16, and reducing the impact force experienced by the pull tube 64 and the valve needle 16 at the engagement surfaces 80, 81. This optimization allows for improved performance and reliability of the fuel injector while reducing maintenance and replacement costs.

### List of parts

10 - fuel injector
12 - injection nozzle
14 - nozzle body
16 - valve needle
18 - nozzle tip
20a - first actuator arrangement
20b - second actuator arrangement
22 - sac volume
24 - nozzle outlet(s)
26 - nozzle bore
28 - shoulder region of the nozzle body
30 - tubular housing
32 - internal bore of the tubular housing
34 - opening of the tubular housing
36 - head end of the nozzle body
37 - insert
38 - spring chamber
40 - nozzle spring
42 - valve seat region
44, 54 - first and second coils
46, 56 - first and second core members
46a, 56a - upper region of first and second core members
46b, 56b - lower region of the first and second core members
47, 57 - first and second coil-formers
52, 60 - first and second armatures
61, 62 - stop surfaces of the first and second armatures
64 - pull tube (valve needle coupling member)
66 - internal bore of the pull tube
67 - thick walled portion of pull tube70 - armature return spring
71 - resting plate
72 - integral collar of the valve needle
74 - upper stem of the valve needle
76 - lift member
80 - engagement surface of the pull tube
81 - engagement surface of the lift member
82 - pull tube hole
84 - spring seat
86 - bottom stop member
87 - support ring
88 - annular ring
89 - stop surface of bottom stop member
D - separation distance

## Claims

1. A fuel injector (10) for delivering gaseous fuel to an internal combustion engine, the fuel injector (10) comprising:
an injection nozzle (12) comprising a nozzle body (14) provided with a nozzle bore (26);
a valve needle assembly received within the nozzle bore (26) and including a valve needle (16) engageable with a seat region (42) to control gaseous fuel delivery through at least one outlet (24) of the injection nozzle (12);
an actuator arrangement comprising at least a first actuator (20a) including a first armature (52) and a second actuator (20b) including a second armature (60), both the first armature (52) and the second armature (60) being carried by a valve needle coupling member (64) which is operable to apply an opening force from the first actuator (20a) and the second actuator (20b) to an engagement surface (81) of the valve needle assembly to cause an opening movement thereof when the first actuator (20a) and the second actuator (20b) are actuated; and
a stop member (86) which defines a stop surface with which the first armature (52) is brought into engagement when the valve needle (16) is brought to close against the seat region (42) and further defines an abutment surface for a spring (40) which serves to urge the valve needle (16) against the seat region (42) to close the valve needle (16) when the first actuator (52) and the second actuator (60) are de-actuated;
wherein the valve needle coupling member (64) defines a separation distance (D) with the engagement surface (81) of the valve needle assembly so that the valve needle coupling member (64) only impacts the engagement surface (81) when the valve needle coupling member (64) has moved through the separation distance following actuation, and whereby the valve needle coupling member (64) and the engagement surface (81) remain engaged through a full range of movement of the valve needle (16) to a full lift position.

2. The fuel injector (10) as claimed in claim 1, wherein the valve needle coupling member (64) is a pull tube within which a portion of the valve needle (16) is received.

3. The fuel injector (10) as claimed in claim 2, wherein the pull tube (64) defines a flow path for gaseous fuel through the injection nozzle (12).

4. The fuel injector (10) as claimed in claim 2 or claim 3, wherein the pull tube (64) is provided with at least one opening (82) to allow gaseous fuel flowing within the pull tube (64) to flow radially out through the pull tube (64) for delivery to downstream parts of the injection nozzle (12).

5. The fuel injector (10) as claimed in any of claims 1 to 4, wherein the valve needle coupling member (64) defines an internal engagement surface (80) which is engageable with the engagement surface (81) of the valve needle assembly.

6. The fuel injector (10) as claimed in claim 5, wherein the internal engagement surface (80) of the valve needle coupling member (64) and the engagement surface (81) of the valve needle assembly are frusto-conical surfaces.

7. The fuel injector (10) as claimed in any of claims 1 to 6, wherein the engagement surface (81) of the valve needle assembly is defined by a lift member (76) carried on the valve needle (16).

8. The fuel injector (10) as claimed in claim 7, wherein the lift member (76) is a tubular part carried on the valve needle (16).

9. The fuel injector (10) as claimed in any of claims 1 to 8, wherein the stop member (86) is formed from a damping material so that the stop member (86) absorbs movement of the first armature (52) as it is brought into engagement with the stop member (86).

10. The fuel injector (10) as claimed in any of claims 1 to 9, further comprising first and second stop surfaces (61,62) for the first and second armatures (52,60), respectively, with which the first and second armatures (52,60) engage when the valve needle (16) moves into the full lift position.

## Patentansprüche

1. Kraftstoffeinspritzventil (10) zur Zufuhr von gasförmigem Kraftstoff in einen Verbrennungsmotor, wobei das Kraftstoffeinspritzventil (10) Folgendes umfasst:
Eine Einspritzdüse (12), die einen mit einer Düsenbohrung (26) versehenen Düsenkörper (14) umfasst;
eine Ventilnadelanordnung, die innerhalb der Düsenbohrung (26) aufgenommen ist und eine Ventilnadel (16) umfasst, die mit einem Sitzbereich (42) in Eingriff steht, um die Zufuhr von gasförmigem Kraftstoff durch mindestens einen Auslass (24) der Einspritzdüse (12) zu steuern;
eine Aktuatoranordnung, die mindestens einen ersten Aktuator (20a) einschließlich eines ersten Ankers (52) und einen zweiten Aktuator (20b) einschließlich eines zweiten Ankers (60) umfasst, wobei sowohl der erste Anker (52) als auch der zweite Anker (60) von einem Ventilnadelkupplungselement (64) getragen werden, das so beschaffen ist, dass es eine Öffnungskraft vom ersten Aktuator (20a) und dem zweiten Aktuator (20b) auf eine Eingriffsfläche (81) der Ventilnadelanordnung ausübt, um eine Öffnungsbewegung derselben zu bewirken, wenn der erste Aktuator (20a) und der zweite Aktuator (20b) betätigt werden; und
ein Anschlagelement (86), das eine Anschlagfläche definiert, mit welcher der erste Anker (52) in Eingriff gebracht wird, wenn die Ventilnadel (16) gegen den Sitzbereich (42) geschlossen wird, und das ferner eine Auflagefläche für eine Feder (40) definiert, die dazu dient, die Ventilnadel (16) gegen den Sitzbereich (42) zu drängen, um die Ventilnadel (16) zu schließen, wenn der erste Aktuator (20a) und der zweite Aktuator (20b) deaktiviert sind;
wobei das Ventilnadelkupplungselement (64) einen Trennungsabstand (D) zur Eingriffsfläche (81) der Ventilnadelanordnung definiert, sodass das Ventilnadelkupplungselement (64) die Eingriffsfläche (81) nur dann berührt, wenn es sich nach der Betätigung durch den Trennungsabstand bewegt hat, und wobei das Ventilnadelkupplungselement (64) und die Eingriffsfläche (81) über den gesamten Bewegungsbereich der Ventilnadel (16) bis zur vollen Hubposition im Eingriff bleiben.

2. Kraftstoffeinspritzventil (10) nach Anspruch 1, wobei das Ventilnadelkupplungselement (64) ein Zugrohr ist, in dem ein Teil der Ventilnadel (16) aufgenommen ist.

3. Kraftstoffeinspritzventil (10) nach Anspruch 2, wobei das Zugrohr (64) einen Strömungsweg für gasförmigen Kraftstoff durch die Einspritzdüse (12) definiert.

4. Kraftstoffeinspritzventil (10) nach Anspruch 2 oder 3, wobei das Zugrohr (64) mit mindestens einer Öffnung (82) versehen ist, durch die gasförmiger Kraftstoff, der sich innerhalb des Zugrohrs (64) befindet, radial durch das Zugrohr (64) austreten und den nachgelagerten Teilen der Einspritzdüse (12) zugeführt werden kann.

5. Kraftstoffeinspritzventil (10) nach einem der Ansprüche 1 bis 4, wobei das Ventilnadelkupplungselement (64) eine innere Eingriffsfläche (80) aufweist, die mit der Eingriffsfläche (81) der Ventilnadelanordnung in Eingriff steht.

6. Kraftstoffeinspritzventil (10) nach Anspruch 5, wobei die innere Eingriffsfläche (80) des Ventilnadelkupplungselements (64) und die Eingriffsfläche (81) der Ventilnadelanordnung kegelstumpfförmige Flächen sind.

7. Kraftstoffeinspritzventil (10) nach einem der Ansprüche 1 bis 6, wobei die Eingriffsfläche (81) der Ventilnadelanordnung durch ein an der Ventilnadel (16) angebrachtes Hubelement (76) definiert ist.

8. Kraftstoffeinspritzventil (10) nach Anspruch 7, wobei das Hubelement (76) ein auf der Ventilnadel (16) getragenes rohrförmiges Teil ist.

9. Kraftstoffeinspritzventil (10) nach einem der Ansprüche 1 bis 8, wobei das Anschlagelement (86) aus einem Dämpfungsmaterial gebildet ist, sodass das Anschlagelement (86) die Bewegung des ersten Ankers (52) absorbiert, wenn dieser mit dem Anschlagelement (86) in Eingriff gebracht wird.

10. Kraftstoffeinspritzventil (10) nach einem der Ansprüche 1 bis 9, ferner erste und zweite Anschlagflächen (61, 62) für den ersten bzw. zweiten Anker (52, 60) umfassend, mit denen der erste bzw. der zweite Anker (52, 60) in Eingriff kommt, wenn sich die Ventilnadel (16) in die Vollhubposition bewegt.

## Revendications

1. Injecteur de carburant (10) servant à distribuer un carburant gazeux à un moteur à combustion interne, l'injecteur de carburant (10) comprenant :
une buse d'injection (12) comprenant un corps de buse (14) pourvu d'un orifice de buse (26) ;
un ensemble aiguille reçu à l'intérieur de l'orifice de buse (26) et comprenant une aiguille (16) propre à venir en contact avec une région de siège (42) afin de réguler la distribution de carburant gazeux à travers au moins une sortie (24) de la buse d'injection (12) ;
un système d'actionneurs comprenant au moins un premier actionneur (20a) comprenant un premier induit (52) et un second actionneur (20b) comprenant un second induit (60), le premier induit (52) et le second induit (60) étant supportés par un élément d'accouplement d'aiguille (64) actionnable pour appliquer une force d'ouverture du premier actionneur (20a) et du second actionneur (20b) à une surface de contact (81) de l'ensemble aiguille afin de provoquer un mouvement d'ouverture de celui-ci lorsque le premier actionneur (20a) et le second actionneur (20b) sont actionnés ; et
un élément d'arrêt (86) qui définit une surface d'arrêt avec laquelle le premier induit (52) est mis en contact lorsque l'aiguille (16) est mise en position de fermeture contre la région de siège (42) et qui définit, en outre, une surface de butée pour un ressort (40) servant à solliciter l'aiguille (16) contre la région de siège (42) afin de mettre l'aiguille (16) en position de fermeture en l'absence d'un actionnement du premier actionneur (20a) et du second actionneur (20b) ;
dans lequel l'élément d'accouplement d'aiguille (64) définit une distance de séparation (D) avec la surface de contact (81) de l'ensemble aiguille de telle sorte que l'élément d'accouplement d'aiguille (64) ne vient heurter la surface de contact (81) que lorsque l'élément d'accouplement d'aiguille (64) a parcouru la distance de séparation à la suite d'un actionnement, et l'élément d'accouplement d'aiguille (64) et la surface de contact (81) restant alors en contact sur une plage de mouvement entière de l'aiguille (16) jusqu'à une position d'élévation totale.

2. Injecteur de carburant (10) selon la revendication 1, dans lequel l'élément d'accouplement d'aiguille (64) est un tube de traction à l'intérieur duquel est reçue une partie de l'aiguille (16).

3. Injecteur de carburant (10) selon la revendication 2, dans lequel le tube de traction (64) définit une voie d'écoulement pour le carburant gazeux à travers la buse d'injection (12).

4. Injecteur de carburant (10) selon la revendication 2 ou la revendication 3, dans lequel le tube de traction (64) est pourvu d'au moins une ouverture (82) pour permettre au carburant gazeux s'écoulant à l'intérieur du tube de traction (64) de s'écouler radialement vers l'extérieur à travers le tube de traction (64) pour être acheminé à des parties en aval de la buse d'injection (12).

5. Injecteur de carburant (10) selon l'une quelconque des revendications 1 à 4, dans lequel l'élément d'accouplement d'aiguille (64) définit une surface de contact interne (80) qui est propre à être mise en contact avec la surface de contact (81) de l'ensemble aiguille.

6. Injecteur de carburant (10) selon la revendication 5, dans lequel la surface de contact interne (80) de l'élément d'accouplement d'aiguille (64) et la surface de contact (81) de l'ensemble aiguille sont des surfaces tronconiques.

7. Injecteur de carburant (10) selon l'une quelconque des revendications 1 à 6, dans lequel la surface de contact (81) de l'ensemble aiguille est définie par un élément de levage (76) supporté par l'aiguille (16).

8. Injecteur de carburant (10) selon la revendication 7, dans lequel l'élément de levage (76) est une pièce tubulaire supportée par l'aiguille (16).

9. Injecteur de carburant (10) selon l'une quelconque des revendications 1 à 8, dans lequel l'élément d'arrêt (86) est composé d'un matériau amortisseur de telle sorte que l'élément d'arrêt (86) absorbe le mouvement du premier induit (52) lorsqu'il est mis en contact avec l'élément d'arrêt (86).

10. Injecteur de carburant (10) selon l'une quelconque des revendications 1 à 9, comprenant, en outre, des première et seconde surfaces d'arrêt (61, 62) pour les premier et second induits (52, 60), respectivement, avec lesquelles les premier et second induits (52, 60) entrent en contact lorsque l'aiguille (16) se déplace jusqu'à la position d'élévation totale.
